# EUROPÄISCHE PATENTANMELDUNG

(11) **EP 1 052 021 A1**
(43) Veröffentlichungstag der Anmeldung: **15.11.2000**
(21) Anmeldenummer: 99108578.8
(22) Anmeldetag: 06.05.1999
(51) Int. Cl.: B03B 9/06, B29B 17/02

(54) **Sortier- und Trennverfahren und Anlage für ein Recycling von Kunstoffen**

(71) Anmelder: von Deym, Carl-Ludwig, Graf, 63667 Nidda 1 (DE); Streuber, Fritz Michael, 32120 Hiddenhausen (DE)
(72) Erfinder: von Deym, Carl-Ludwig, Graf, 63667 Nidda 1 (DE); Streuber, Fritz Michael, 32120 Hiddenhausen (DE)
(74) Vertreter: Schwabe - Sandmair - Marx

(57) **Zusammenfassung**

Bei einem Sortier- und Trennverfahren für ein Recycling von Kunststoffen, die in einem Kunststoffgemisch als Abfall vorliegen, das Kunststoffgemisch nach Farben sortiert und getrennt. Dadurch erhaltene, nach Farben getrennte Kunststofffraktionen werden nach Kunststoffsorten sortiert und getrennt.

## Beschreibung

Die Erfindung betrifft ein Sortier- und Trennverfahren für ein Recycling von Kunststoffen und eine Anlage für ein Recycling von Kunststoffen und vorzugsweise auch für ein Recycling von anderen Materialien.

Abfallstoffe aus Hausmüll, Industriemüll und/oder Müll, der direkt aus dem Wirtschaftskreislauf kommt oder bereits in Abfalldeponien gelagert ist, werden in allenfalls unbefriedigender Weise einem Recyclingprozess unterzogen. Insbesondere trifft dies für Kunststoffabfälle zu. Regranulierter Kunststoff einer Sorte weist nach Durchlaufen heutiger Recyclingverfahren einen Reinheitsgrad von bestenfalls 95% und eine gräuliche Farbe auf. Hieraus kann ein mit einem neuwertigen Produkt vergleichbares Recycling Produkt nicht hergestellt werden.

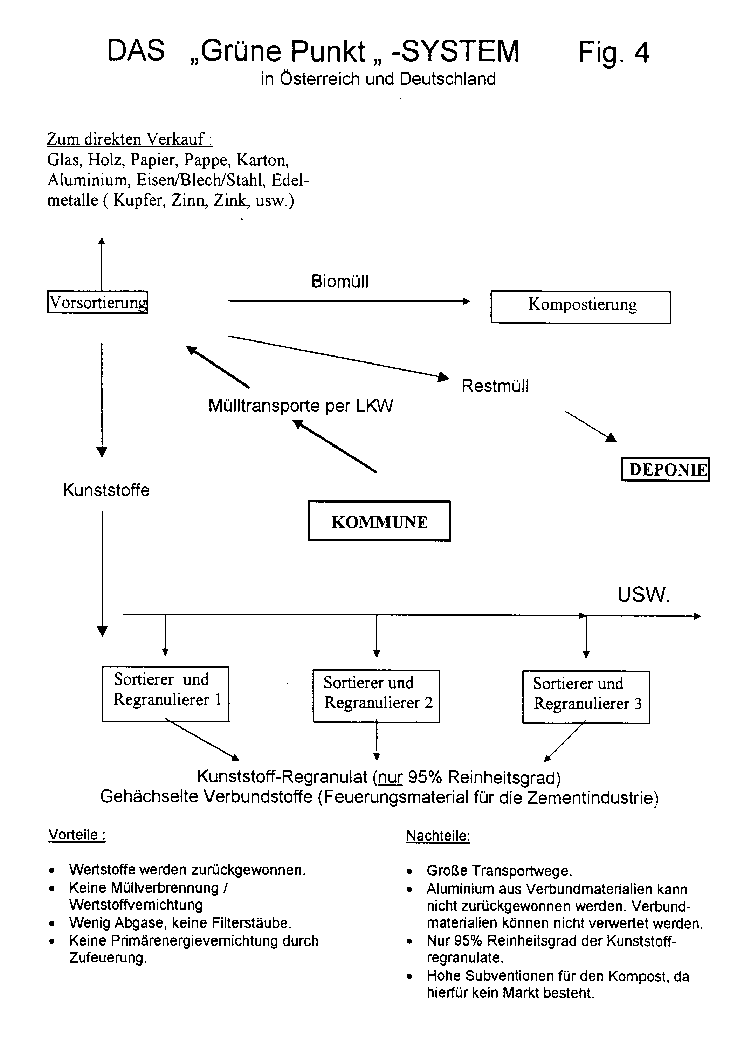

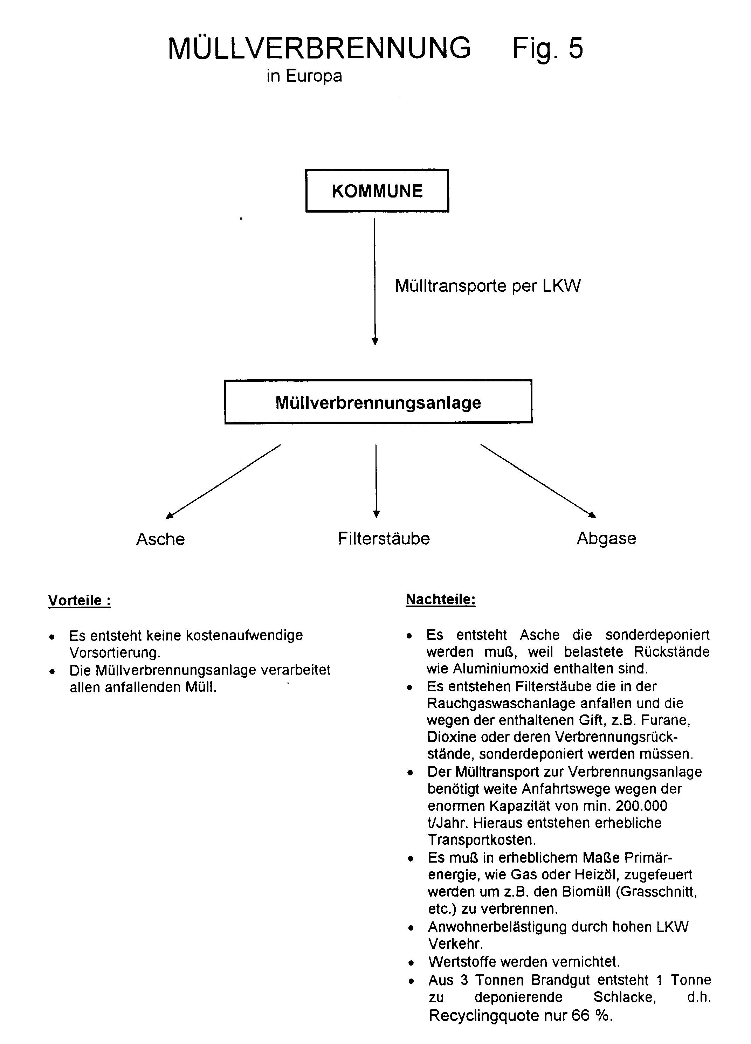

Beispiele für bekannte Entsorgungssysteme sind in den Figuren 4 und 5 mit ihren Vor- und Nachteilen dargestellt.

Heutige Entsorgungs- und Recyclingsysteme bringen als weiteres Problem mit sich, dass in Endverbraucherhaushalten und/oder in Industriebetrieben aufgrund vielfältiger Vorsortierung von Abfallstoffen eine Vielzahl von Gebinden für unterschiedliche Müllfraktionen eingesetzt werden müssen. Hierdurch entstehende hohe Entsorgungskosten werden noch dadurch erhöht, dass derart vorsortierte Kunststofffraktionen in Müllfahrzeugen nicht stark verdichtet werden dürfen, da sie sonst nicht mehr weiter sortiert werden können. Materialidentifikationen sind oft nicht mehr erkennbar.

Darüberhinaus existiert oft auch in Industriestaaten keine Vorsortierung am Ort der Abfallentstehung. Eine Vorsortierung ist in vielen Ländern von vornherein nicht durchsetzbar.

Die Erfindung hat es sich zur Aufgabe gemacht, die Qualität von Recycling Kunststoffen zu verbessern.

Diese Aufgabe wird durch die Gegenstände der unabhängigen Ansprüche gelöst.

Die Erfindung geht von einem Sortier- und Trennverfahren für ein Recycling von Kunststoffen bzw. Kunststoffabfällen aus, die in einem Kunststoffgemisch vorliegen. Das Kunststoffgemisch kann beispielsweise eine bereits in Haushalten vorsortierte Kunststofffraktion sein. Das Kunststoffgemisch kann aber auch im Wege einer Vorsortierung und Trennung aus einem Material- bzw. Stoffgemisch erhalten worden sein, in dem die Kunststoffe vermischt mit Nichtkunststoffen enthalten waren. In einer bevorzugten Ausführungsform betrifft die Erfindung ein Sortier- und Trennverfahren für ein Recycling von gemischten Abfällen und umfasst dann vorzugsweise auch eine Vorsortierung und Trennung von Kunststoffen, falls die zu recycelnden Kunststoffe in einem Materialgemisch, beispielsweise als Deponieaushub oder vermischter Haus- und/oder Industriemüll dem Verfahren aufgegeben werden. Das Material- bzw. Stoffgemisch wird insbesondere durch Haushaltsmüll, beispielsweise die Grüne Punkt Fraktion, Sperrmüll, Industriemüll. die Deponiefraktion oder eine beliebige Kombination dieser Fraktionen gebildet.

Eine Anlage für ein Recycling von Kunststoffen und vorzugsweise auch für ein Recycling von anderen Materialien, die in solch einem Materialgemisch enthalten sind, umfasst vorzugsweise eine erste Sortentrenneinrichtung, mit der Kunststoffe und Nichtkunststoffe voneinander getrennt werden. Sie umfasst wenigstens eine zweite Sortentrenneinrichtung, mit der die von den Nichtkunststoffen getrennten Kunststoffe nach Kunststoffsorten voneinander getrennt werden.

Nach der Erfindung wird das Kunststoffgemisch nicht nur nach Sorten, sondern auch nach Farben sortiert und getrennt. Die Sortierung und Trennung nach Farben wird vor der Sortierung und Trennung nach Kunststoffsorten durchgeführt. Vorzugsweise erfolgt die Farbsortierung nach Grundfarben. Die Grundfarben der Farbsortierung werden vorzugsweise durch standardisierte Farben, insbesondere die Farben grün, gelb, rot, schwarz, weiß, blau und transparent gebildet. Bei den Grundfarben handelt es sich vorzugsweise um RAL-Grundfarben. Die Farbsortierung und Trennung nach Farben kann händisch oder automatisch erfolgen.

Ein Vorteil der Erfindung ist, dass eine Trennung von Müll in privaten Haushalten nicht mehr erforderlich ist. Vorzugsweise findet jedoch was den Haushaltsmüll anbetrifft auch bei Einsatz des erfindungsgemäßen Verfahrens bzw. einer erfindungsgemäßen Anlage eine Sortierung und Trennung bei den Haushalten statt, dann vorzugsweise jedoch nur in zwei Müllbehältnissen, nämlich eines für Bioabfälle und eines für alle anderen Fraktionen des Haushaltsmülls. Solch eine Trennung erfolgt jedoch in erster Linie aus rein hygienischen Gesichtspunkten und nicht aufgrund eines in der Erfindung begründeten Erfordernisses.

Um eine automatische Farbsortierung und Trennung zu erleichtern oder überhaupt erst zu ermöglichen, ist es vorteilhaft, wenn die angelieferten Kunststoffe in Form von beispielsweise Formteilen und Folien eine jeweils genau einer Grundfarbe zuordenbare Kodierung aufweisen, vorzugsweise in Form eines eincompoundierten, laserdektierbaren Materials. Das laserdetektierbare Material kann in der Raffinerie eincompoundiert werden. Bevorzugt wird allerdings die Eincompoundierung in die sogenannten Masterbatches beim Erstverarbeiter. Durch die Eincompoundierung erst nach der Raffinerie, vorzugsweise beim Erstverarbeiter in das Masterbatch, ist eine Extrahierung des laserdetektierbaren Grundfarbenidentifikationsmittels möglich. Die Eincompoundierung in der Raffinerie wäre zwar grundsätzlich einfacher zu bewerkstelligen und sicherzustellen, bringt jedoch den Nachteil mit sich, dass in Folge von etwaigen Farbfehlsortierungen bei einem Recycling allmählich eine Vermischung stattfände und ein Downcycling damit vorgezeichnet wäre. Derart kodifizierte Kunststoffe, insbesondere masterbatchkodifizierte Kunststoffe, sind ebenfalls Gegenstand der Erfindung und werden nur in der vorliegenden Anmeldung als solche nicht gesondert beansprucht.

Eine erfindungsgemäße Anlage für das Recycling der Kunststoffe weist eine Einrichtung für die Farbsortierung und Trennung auf, die in Bezug auf den Materialstrom in der Anlage zwischen der genannten ersten Sortentrenneinrichtung, falls eine solche vorhanden ist, und der genannten zweiten Sortentrenneinrichtung angeordnet ist. Die Sortierung und Trennung nach Farben wird nachfolgend abgekürzt als Farbtrennung bezeichnet.

Durch das erfindungsgemäße Verfahren und die erfindungsgemäße Anlage werden Kunststoffe in wirtschaftlicher Weise sowohl sorten- als auch farbrein erhalten, die im Recycling bislang nur in einem grauen Farbton gewonnen werden. Das mit dem erfindungsgemäßen Verfahren sorten- und farbrein gewonnene Kunststoffrecyclat kann durch Aufschmelzen und anschließendes Compoundieren und vorzugsweise Regranulieren wieder zu einem Ausgangsmaterial für Kunststoffformkörper, Kunststofffolien oder dergleichen aufbereitet werden, das auch in Bezug auf Farbe hohen Ansprüchen genügt. Insbesondere kann ein mittels des erfindungsgemäßen Verfahrens gewonnenes Kunststoffrecyclat auch wieder für Sichtflächen verwendet werden und nicht beispielsweise lediglich als Füllmaterial.

Vorzugsweise werden die derart gebildeten grundfarbenreinen Kunststofffraktionen unmittelbar nach der Sortierung und Trennung nach im vorhinein festgelegten Grundfarben fraktionsweise in einem Extrakteur einer Extraktion unterzogen. Als Extrakteur wird vorzugsweise ein Karussellextrakteur verwendet. Besonders bevorzugt wird nach der Erfindung Ethylacetat als Extraktionsmedium verwendet. Bevorzugt wird ein Standardkarussellextrakteur in Kombination mit heißem Ethylacetat als Extraktionsmedium verwendet.

Vorzugsweise wird das Extraktionsmedium vor der Extraktion auf eine Temperatur gebracht, die zwischen 30°C und der Siedetemperatur des Extraktionsmediums liegt. Besonders bevorzugt wird es auf eine Temperatur im Bereich von 30 bis 60°C vorgewärmt. Die Temperatur des Extraktionsmediums entspricht mindestens derjenigen des zu reinigenden Materials. Durch die Erwärmung des Extraktionsmediums wird eine Kondensation desselben auf dem zu reinigenden Material vermieden. Das Extraktionsmedium wird auf die Kunststofffraktion bevorzugt mit einer Temperatur aufgebracht, die höher als diejenige der Kunststofffraktion ist. Das Kunststoffmaterial wird zweckmäßigerweise bei Raumtemperatur in die Extraktionseinrichtung verbracht. Bevorzugt wird das Extraktionsmedium auf das Kunststoffmatierial gesprüht, gerieselt oder geträufelt, d.h. sparsam dosiert aufgebracht. Indem bevorzugterweise ein Extraktionsvollbad nicht gebildet wird, findet zum einen ein sparsamer Umgang mit dem Extraktionsmedium statt, und zum anderen wird die bei der bevorzugten Verwendung von Ethylacetat als Extraktionsmedium bestehende Explosionsgefahr gänzlich ausgeschaltet oder soweit vermindert, dass eine explosionsgeschützte Ausfertigung der Extraktionseinrichtung nicht erforderlich ist.

Die Extraktionseinrichtung in der Form eines bevorzugten Karussellextrakteurs wird durch Kammern in einer Trommel gebildet, die bei der Extraktion um eine gemeinsame Achse gedreht werden, wobei die Kammern in Drehrichtung hintereinander angeordnet sind. Im Laufe einer Umdrehung durchlaufen die Kammern mehrere Stationen, insbesondere eine Einfüllstation für die Kunststofffraktion, eine Station zum Aufbringen des Extraktionsmittels, eine Station zum Abziehen des Extraktionsmittels, eine Station zur Einbringung von Heissdampf und eine Station zum Entladen. Durch die Segmentierung wird einer Explosionsgefahr weiter entgegengewirkt.

Nach der Sortierung und Trennung nach Farben und vor der Extraktion werden die Farbfraktionen zweckmäßigerweise zerkleinert, beispielsweise mittels eines Schneidwerkzeugs geschreddert. Die hierbei erhaltenen Kunststoffpartikel für den Extrakteur weisen einen Durchmesser im Bereich von vorzugsweise 5 bis 20 mm auf.

Die erfindungsgemäße Verfahrensführung der Vorschaltung einer Farbtrennung vor die Trennung nach Sorten hat den Vorteil, dass die Kunststoffe, die in Raffinerien nach den Grundfarben, insbesondere den RAL-Grundfarben, eingefärbt werden, in ihrer Grundfarbe erhalten bleiben. Die Erfindung basiert auf der Erkenntnis, dass in die Polymerketten der Kunststoffe zum Einfärben in die Grundfarben Farbmonomere eingebettet werden. Die Farbmonomere können ohne Zerstörung der Polymerketten nicht wieder aus der Kunststoffmatrix entfernt werden. Diese Erkenntnis wird dazu genutzt, zunächst Farbfraktionen aus dem Kunststoffgemisch zu bilden und erst diese Farbfraktionen nach Sorten zu trennen. Die Trennung nach Kunststoffsorten kann mittels bewährten Methoden, vorzugsweise in einer mechanisch-physikalischen Trenneinrichtung, erfolgen. Nuancierte Farben werden zu der nächstliegenden Grundfarbe sortiert, beispielsweise hellgrün zur Grundfarbe grün und lila zur Grundfarbe rot.

Mittels der erfindungsgemäß nachgeschalteten Extraktion können zwar die ab Raffinerie in die Polymerketten eingebetteten Farbmonomere aus den Polymerketten nicht mehr gelöst werden ohne die Polymerketten zu beschädigen oder gar zu zerstören. Farbnuancierungen für kleinere Mengen von Kunststoffen - kleiner im Vergleich zu den Mengen der Grundfarbenkunststoffe - werden jedoch dadurch erzielt, dass die Kunststoffoberflächen teil- oder vollflächig bedruckt oder lackiert werden oder indem Farbcompoundings, beispielsweise Titandioxid, bei einer Extrusion als Zuschlagsstoff zugegeben werden.

Durch eine der Farbtrennung nachgeschaltete und der Kunststoffsortentrennung vorgeschaltete Extraktion, vorzugsweise unter Verwendung von Ethylacetat als Extraktionsmedium, können sämtliche Verunreinigungen und Anhaftungen mit Ausnahme der zum Einfärben in die Grundfarben in die Polymerketten der Kunststoffe eingebetteten Farbmonomere extrahiert werden. Bei den Verunreinigungen und Anhaftungen kann es sich zum einen um Zuschlagsstoffe oder Druckfarben handeln, die vom Hersteller eingearbeitet bzw. aufgebracht worden sind oder auch um Stoffe, die durch den Gebrauch erst in ein Kunststoffprodukt eingelagert worden sind.

Die nach der Farbtrennung und vorzugsweise Extraktion erfolgende Sortierung und Trennung nach Kunststoffsorten beinhaltet vorzugsweise eine thermische Trennung, bei der Schmelzpunktdifferenzen von thermisch zu trennenden Kunststoffen bzw. Kunststoffsorten ausgenutzt werden. Die thermische Trennung erfolgt vorzugsweise in einer Kammer bzw. einem Tunnel, der mit einem heißen Gas beschickt wird. Die Tunnelatmosphäre kann jedoch auch mittels einer Heizung im Tunnel auf die erforderliche Temperatur gebracht und dort gehalten werden. Die thermisch zu trennenden Kunststoffe werden in dem Tunnel auf einer perforierten Auflage aufliegend weitergefördert. Die perforierte Auflage ist vorzugsweise als endlos umlaufendes, perforiertes Förderband ausgebildet. Grundsätzlich kann die perforierte Auflage auch durch perforierte Platten gebildet werden, die mittels eines Förderbands oder als eigener Förderwagen chargenweise einzeln weiterbewegt werden. Vorzugsweise ist unterhalb der perforierten Auflage eine Kühleinrichtung, insbesondere ein Kühlbad, angeordnet, in die ein in dem Tunnel geschmolzenes Kunststoffmaterial von der perforierten Auflage hineintropft und sich darin wieder verfestigt. Vorteilhafterweise ist innerhalb eines Kühlbads ein weiteres Fördermittel, insbesondere Förderband, angeordnet, mit dem das wieder verfestigte Kunststoffmaterial zum Trocknen zu einer Trocknungseinrichtung transportiert wird. Der erfindungsgemäße Thermoscanner arbeitet besonders bevorzugt nach dem Prinzip eines Heissluftschrumpftunnels. Mit dem Begriff der perforierten Auflage sollen nicht nur gelochte Auflagen, sondern auch Gitter- und Maschenauflagen und dergleichen umfasst sein, solange die Doppelfunktion des Aufliegens einerseits und Durchfließens andererseits erfüllt wird.

Die Anlage weist bevorzugt einen Biogaserzeuger mit einer oder mehreren nachgeschalteten kleinen Gasturbinen auf. In dem Biogaserzeuger wird aus organischen Stoffen, die in der Anlage aus dem Ausgangsmaterialgemisch und/oder dem daraus erhaltenen Kunststoffgemisch entfernt worden sind, mittels Mikroorganismen Methangas erzeugt. Das erzeugte Methangas wird in der wenigstens einen Gasturbine verbrannt. Ein dabei entstehendes Verbrennungsgas wird zur Erzeugung von Prozessenergie für die Anlage verwendet. Insbesondere kann die derart von der Anlage selbst erzeugte Prozessenergie zur Bereitstellung oder Erzeugung von Dampf für den Extrakteur oder den Thermosscanner, falls solche Anlagenkomponenten vorhanden sind, oder für beide Anlagenkomponenten verwendet werden.

Die Anlage weist vorteilhafterweise auch eine Span- und Faserrecyclingeinrichtung auf, mit der in einem mehrstufigen chemo-thermo-mechanischen Verfahren aus Holzabfällen, insbesondere Pressspanmaterial und Altmöbeln, die in der Anlage aus dem Materialgemisch herausgetrennt worden sind, Späne und Fasern gewonnen werden. Vorzugsweise ist der chemo-thermo-mechanischen Einheit der Span- und Faserrecyclingeinrichtung eine Presse nachgeschaltet, die ein die chemo-thermo-mechanische Einheit verlassendes Gemisch aus Klärschlamm und Restspänen und -fasern zu Pressstücken presst. Diese Pressstücke, die vorzugsweise in die Form von Brickets gepresst werden, können anschließend in handliche Träger, beispielsweise zu je 10-Kilogramm, kommisioniert werden, um als Ersatzbrennstoff für Kohlebrickets verfeuert zu werden. Aus diesem Gemisch kann statt Pressstücken auch Dünger hergestellt werden.

Vor der Farbtrennung und nach einer vorzugsweise durchgeführten ersten Sortentrennung nach Kunststoffen und Nichtkunststoffen, wird das Kunststoffgemisch vorzugsweise einer Analyse auf Materialdegradation unterzogen. Basierend auf dem Analyseergebnis werden Kunststoffe, die einen vorgegebenen Degradationsgrad unterschreiten, von Kunststoffen getrennt weiterbehandelt, die diesen vorgegebenen Degradationsgrad nicht unterschreiten. Es findet in anderen Worten somit eine Qualitätskontrolle und Trennung von Kunststoffen unterschiedlicher Qualitäten statt. Obgleich bevorzugt eine Qualitätstrennung nur nach zwei Qualitäten stattfindet, wäre eine Trennung nach mehr als zwei Qualitäten ebenfalls denkbar. Die Qualitätskontrolle dient der Trennung von Kunststoffen mit zerstörter Molekularstruktur von Kunststoffen mit einer Molekularstruktur, die für eine Weiterverarbeitung ausreichend intakt und damit lohnenswert ist.

Als Gradmesser für die Degradation dient die Länge der Molekülketten der Kunststoffe. Materialdegradationen können insbesondere aufgrund von Einwirkungen des Sonnenlichts bei einer Lagerung der Kunststoffe in dem Kunststoffgemisch oder einem Materialgemisch, aus dem das Kunststoffgemisch gebildet worden ist, hervorgerufen sein. Unter der Einwirkung des Sonnenlichts findet eine UV bedingte Degradation durch Zersetzung der Molekülketten der Kunststoffe statt. Solch eine Zersetzung über einen vorgegebenen, zulässigen Degradationsgrad hinaus kann bereits nach einer mehrwöchigen Lagerung im Freien erfolgt sein. Der vorgegebene Degradationsgrad im Sinne der Erfindung entspricht einem Zustand der Kunststoffe, in dem die Längen der Molekülketten der Kunststoffe im Mittel eine Mindestlänge unterschreiten, die von Kunststoffsorte zu Kunststoffsorte variieren kann. Die Degradation von Kunststoffen wird durch Bestrahlung mit UV-Licht und auch den Recyclinggrad beeinflusst. Hierbei ist ausschlaggebend, dass gewisse Kunststoffe, wie sie z.B. in der Lebensmittelindustrie Verwendung finden, nicht mit UV-Stabilisatoren ausgerüstet sind. Diese Kunststoffe zersetzen sich bereits nach einer etwa sechswöchigen Lagerung in der freien Natur. Andererseits reduziert eine Regranulierung im Zuge eines Recyclings ein und desselben Materials die Molekularkette um ein Glied, so dass nach zehn bis zwölf Recyclingvorgängen aus diesem Material kein mechanisch festes Granulat mehr erzeugt werden kann.

Eine bevorzugte Analysemethode besteht darin, einen zu analysierenden Kunststoff auf Zugfestigkeit zu prüfen. Die Degradation wird mittels Zugversuch nach Stand der Technik ermittelt. Die Zugfestigkeit wird als Maß für die Materialdegradation verwendet. Die Prüfung erfolgt vorzugsweise mittels Stichproben. Das zu prüfende Kunststoffgemisch wird vorzugsweise chargenweise geprüft. Bei einer chargenweise durchgeführten Prüfung in einem Stichprobenverfahren wird die gesamte Charge, aus dem der oder die Prüflinge gezogen worden ist oder sind, in Abhängigkeit vom Prüfergebnis einheitlich weiterbehandelt. Die chargenweise Prüfung anhand von Stichproben ist ausreichend aussagekräftig, wenn die Kunststoffe des Kunststoffgemisches eine im Hinblick auf die Materialdegradation einheitliche Vorgeschichte besitzen. Dies ist üblicherweise der Fall, da die Materialdegradation bei den Kunststoffen in erster Linie auf die Einwirkung des Sonnenlichts zurückzuführen ist. Im wesentlichen wird die Degradation somit durch die Lagerungsbedingungen und die Lagerzeit des Kunststoffgemisches oder des Ausgangsmaterialgemisches am Ort der erfindungsgemäßen Anlage bestimmt. Diese äußeren Umstände variieren im wesentlichen nur von Charge zu Charge und nicht innerhalb einer einzelnen Charge.

Kunststoffe, die über den vorgegebenen Degradationsgrad hinaus im vorgenannten Sinne degradiert sind, werden vorzugsweise nicht nach Farben sortiert und getrennt, sondern zerkleinert. Die dabei entstehenden Kunststoffpartikel weisen vorzugsweise eine Partikelgröße im Bereich von 5-20 mm, besonders bevorzugt von 5 bis 10 mm auf.

Eine bevorzugte Verwendung dieses aussortierten Kunststoffgranulats ist die Verbrennung in Verbrennungsanlagen zum Zwecke der Energiegewinnung, vorzugsweise in Kraftwerken und Müllverbrennungsanlagen. Sie können insbesondere die fossilen Primärenergieträger ersetzen oder in beispielsweise Müllverbrennungsanlagen den Heizwert des zu verbrennenden Materials erhöhen. Durch die Zerkleinerung in Partikel kann das derart gewonnene Granulat ohne nennenswerte Umrüstung durch Düsen von Verbrennungsanlagen, insbesondere Kohlenstaubfeuerungsanlagen, gefördert und als Ersatz für fossile Energieträger verbrannt werden. Eine teuere Umrüstung bestehender Verbrennungsanlagen ist nicht erforderlich. Die erfindungsgemäße Zerkleinerung und Verwendung des dadurch erhaltenen Kunststoffgranulats kann mit Vorteil auch für jegliches Kunststoffgemisch der vorstehend beschriebenen Art erfolgen. So ist grundsätzlich eine Materialanalyse nicht unbedingt erforderlich, obgleich bevorzugt. Es kann das angelieferte Kunststoffgemisch auch ungeachtet des Degradationsgrads der darin enthaltenen Kunststoffe einfach zerkleinert und für die Verwendung als Brennstoff in einer Verbrennungsanlage konfektioniert werden.

Es kann auch die vorstehend beschriebene Materialprüfung ohne nachfolgende Sortierung und Trennung nach Farben mit Vorteil zur Bildung von wenigstens zwei Kunststoffmaterialströmen eingesetzt werden, die auf unterschiedliche Art und Weise weiterbehandelt werden. Vorzugsweise wird dann der eine dieser beiden Materialströme mit dem Kunststoffmaterial minderer Qualität wie vorstehend beschrieben hergerichtet und verwendet, und es wird der andere Materialstrom mit dem Kunststoffmaterial höherer Qualität in einem anderen Recycling weiterbehandelt.

Demnach ist Gegenstand der Erfindung auch ein Sortier- und Trennverfahren für ein Recycling von Kunststoffen, die in einem Kunststoffgemisch als Abfall vorliegen, bei dem das Kunststoffgemisch einer Analyse auf Materialdegradation unterzogen wird und in Abhängigkeit von dem Analyseergebnis wenigstens zwei Materialströme gebildet werden. Einer der Materialströme enthält Kunststoffe minderer Qualität, insbesondere mit zerstörter Molekularstruktur. Dieser Materialstrom wird vorzugsweise einer Zerkleinerung unterzogen. Die hierdurch erhaltenen Kunststoffpartikel werden bevorzugt für eine Verwendung als Brennstoff vorgesehen. Der wenigstens eine andere Materialstrom enthält die Kunststoffe in solch einer Qualität, dass ein Recycling mittels einem geeigneten Recyclingverfahren, besonders bevorzugt demjenigen der Erfindung, lohnt.

Ebenso ist Gegenstand der Erfindung eine Zerkleinerung von Kunststoffen, die in einem Kunststoffgemisch als Abfall vorliegen, und Verwendung der hierbei entstehenden Kunststoffpartikel als Brennstoff für eine Verbrennungsanlage. Diese erfindungsgemäße Herrichtung und Verwendung von Abfallkunststoffen wird besonders bevorzugt nach vorheriger Durchführung der vorstehend beschriebenen Analyse und Bildung von wenigstens zwei Materialströmen durchgeführt, ist hierauf jedoch nicht beschränkt. Ganz besonders bevorzugt wird diese erfindungsgemäße Herrichtung und Verwendung im Rahmen des erfindungsgemäßen Sortier- und Trennverfahrens zur weiteren Steigerung der Wirtschaftlichkeit durch optimales Verfügbarmachen der Kunststoffe eingesetzt.

Die erfindungsgemäße Anlage ist vorteilhafterweise modular aufgebaut, so dass sie dem für ihre Aufstellung verfügbaren Gelände und auch der zu lösenden Recyclingaufgabe einfach und in optimaler Weise anpassbar ist. Die Anlage kann einzelne, eine Kombination oder auch alle der vorstehend beschriebenen Anlagenkomponenten umfassen.

Die Kunststoffanalyse, der Extrakteur, der Thermoscanner, der Biogaserzeuger mit nachgeschalteter Gasturbine und die Span- und Faserrecyclingeinrichtung können auch ohne die erfindungsgemäße Sortierung und Trennung nach Farben eingesetzt werden. Beispielsweise kann eine vorhandene Recyclinganlage für Deponieaushub oder ein anderes Materialgemisch der eingangs beschriebenen Art mit einer oder einer Kombination dieser Anlagenkomponenten ausgerüstet werden. Grundsätzlich können die Einrichtungen auch in Verbindung mit der herkömmlichen Trennung nach Kunststoffsorten das Kunststoffrecyclingprodukt verbessernd eingesetzt werden. Besonders vorteilhaft ist es, wenn für den Extrakteur, den Thermoscanner und/oder die Span- und Faserrecyclingeinrichtung für andere Einsatzzwecke bereits entwickelte und am Markt erhältliche Komponenten wie der bevorzugte Karussellextrakteur oder ein Heißluft-Schrumpftunnel verwendet werden, wobei eine weitere erfindungsgemäße Besonderheit darin besteht, dass ein ansonsten herkömmlicher Karussellextrakteur anstatt mit Heisswasser mit heißem Ethylacetat betrieben und/oder eine von herkömmlichen Heissluft-Schrumpftunneln bekannte Palette durch ein angetriebenes Fördermittel mit perforierter Auflage ersetzt wird.

Eine vollintegrierte Recyclinganlage nach der Erfindung mit allen vorstehend beschriebenen Komponenten wird nachfolgend anhand von Figuren beschrieben. Es zeigen:
- Figur 1: die Recyclinganlage mit Anlagenkomponenten für eine Sortierung und Trennung von Kunststoffen nach Farben,
- Figur 2: die Recyclinganlage mit eine Zerkleinerungseinrichtung für aussortierte Kunststoffe und
- Figur 3: einen Thermoscanner.

Mit der Anlage können sämtliche Stoffe der internationalen grünen Abfallliste des Baseler Abkommens sortiert, unsortiert oder in beliebiger Mischfraktion verarbeitet werden. Ein großer Teil dieser Stoffe wird mittels erfindungsgemäßer Recyclingschritte und deren erfindungsgemäßen Abstimmung sowie in erfindungsgemäß verwendeten Anlagenkomponenten gerecycelt. Die Anlage kann Hausmüll, Industriemüll und Deponieaushub einzeln oder gemischt aufnehmen und verarbeiten. Insbesondere kann die Anlage Biomüll wie Grasschnitt, organische Hausabfälle und Gülle, Elektro- und Elektronikschrott, Kunststoffabfälle aus Haushalten und/oder Industrie, komplette, nicht demontierte Lkw und/oder Pkw, Sperrmüll, Restmüll aus Haushaltungen, Verbunde, beispielsweise Kunststoff/Kunststoff-Verbunde, Papier/Kunststoff-Verbunde, Kunststoff/Metall-Verbunde und dergleichen, verarbeiten und zu einem großen Teil wieder recyceln.

In einem ersten Schritt des Recyclingverfahrens wird das zu recycelnde Abfallmaterialgemisch einer Vorsortierung und Trennung in einer Vorsortier- und Trenneinrichtung 1 unterworfen. Die Vorsortier- und Trenneinrichtung 1 umfasst einen FE-Abscheider zum Abscheiden magnetischer Materialien, einen NE-Abscheider zur Trennung von Edel- und Nichtedelmetallen und einen Querstromsichter. Es findet im Ergebnis eine Vorsortierung in Kunststoffe und Nichtkunststoffe statt. Die magnetischen Materialien, Stahl, Glas und Holz werden unmittelbar aussortiert, solange sie in Reinstfraktionen und nicht in Materialverbunden im angelieferten Materialgemisch vorliegen. Sie werden mittels Förderbändern in für die einzelnen Materialfraktionen bereitstehende Container und mittels der Container für einen Verkauf abtransportiert.

Aus dem verbleibenden Materialgemisch werden noch in der Vorsortierungseinrichtung 1 die Kunststoffe aussortiert und mittels eines Förderbands zu einer Hochdruck-Waschanlage mit anschließender Trocknung transportiert. Die Hochdruck-Waschanlage dient als Organik-Abscheider. In der Hochdruck-Waschanlage wird als Waschfluid vorzugsweise Heissdampf oder Heisswasser verwendet.

Das Waschfluid der Hochdruck-Waschanlage mit den darin enthaltenen organischen Abfällen wird geklärt. Das geklärte Waschfluid wird zur Hochdruck-Waschanlage zurückgeführt, d.h. im geschlossenen Kreislauf gefahren. Die bei der Klärung abgeschiedenen organischen Abfälle werden einem Biogaskraftwerk 2 zugeführt.

Die gereinigten Kunststoffe, die noch in einem Kunststoffgemisch vorliegen, werden von der Hochdruck-Waschanlage nach Trocknung zu einer Analyseeinrichtung 6 verbracht und auf Materialdegradation untersucht. Eine Materialdegradation kann insbesondere durch die Einwirkung des Sonnenlichts bei einer Lagerung der Kunststoffe erfolgt sein. Die zu analysierende Materialdegradation besteht in einer Zerstörung der Molekülstruktur oder zumindest einer Verkürzung der Molekülketten der Kunststoffe. Die Degradation kann soweit fortgeschritten sein, dass ein Recycling nicht mehr lohnt.

Die Analyse auf Materialdegradation erfolgt mittels eines Prüfverfahrens. Geprüft wird im Ausführungsbeispiel die Zugfestigkeit von Kunststoffen. Es ist somit die Zugfestigkeit das Maß für die Degradation. Wird ein vorgegebener Mindestwert für die Zugfestigkeit bei der Prüfung unterschritten, so heisst dies, dass ein vorgegebener, noch zulässiger Degradationsgrad überschritten worden ist. Zur Durchführung der Zufestigkeitsprüfung werden einzelne Kunststoffbahnen, Kunststoffteile oder dergleichen aus dem Kunststoffgemisch gezogen, jeweils getrennt aufgeschmolzen und getrennt durch eine Düse gepresst. Es werden so mehrere Stränge von beispielsweise 2 mm Durchmesser gebildet, die anschließend der Zufestigkeitsprüfung unterzogen und auf Unterschreitung des vorgegebenen Mindestwerts für die Zugfestigkeit geprüft werden.

Das Kunststoffgemisch wird chargenweise analysiert. Für die Analyse werden aus jeweils einer Kunststoffgemischcharge Stichproben gezogen. Die Chargen sind in Bezug auf die Materialdegradation ausreichend homogen, so dass anhand weniger Stichproben auf den Degradationsgrad einer gesamten Charge geschlossen werden kann. Die Homogenität hinsichtlich der Materialdegradation ergibt sich von selbst, da die Kunststoffabfälle der Recyclinganlage nicht völlig wahllos zugeführt werden. Die Zuführung zur Recyclinganlage erfolgt bereits chargenweise, beispielsweise in Form einer Charge je von Deponieaushub, Industriebabfall oder Haushaltsabfall. Solche Chargen können im allgemeinen hinsichtlich der Materialdegradation der darin enthaltenen Kunststoffe für das erfindungsgemäße Verfahren als homogen betrachtet werden. Eine nennenswerte Degradation erfolgt in erster Linie aufgrund einer Lagerung am Ort der Recyclinganlage.

Die Analyseeinrichtung 6 kann integrierter Bestandteil der Recyclinganlage und damit unmittelbar am Ort der Recyclinganlage vorhanden sein. Die Analyseeinrichtung 6 kann jedoch auch in einem bereits existierenden Materiallabor entfernt vom Ort der Recyclinganlage gebildet werden. Die gezogenen Materialproben werden in diesem Falle zu dem Materiallabor spediert. Die zugehörige Kunststoffgemischcharge wird zwischengelagert bis das Analyseergebnis vorliegt. Anhand des Analyseergebnisses kann dann wieder vor Ort über die weitere Behandlung der jeweiligen Charge entschieden werden. Das Analyseergebnis kann jedoch auch in Steuerungssignale umgesetzt und im Wege der Datenfernübertragung zur Anlage übermittelt werden, beispielsweise unmittelbar vom Materiallabor.

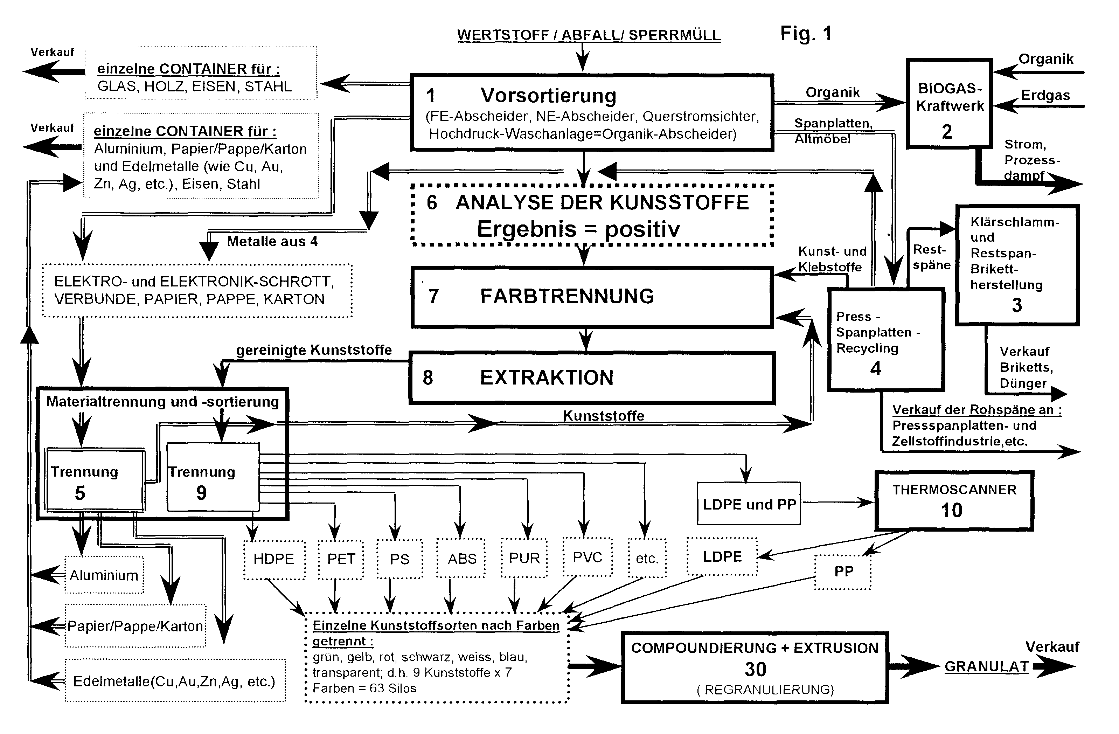

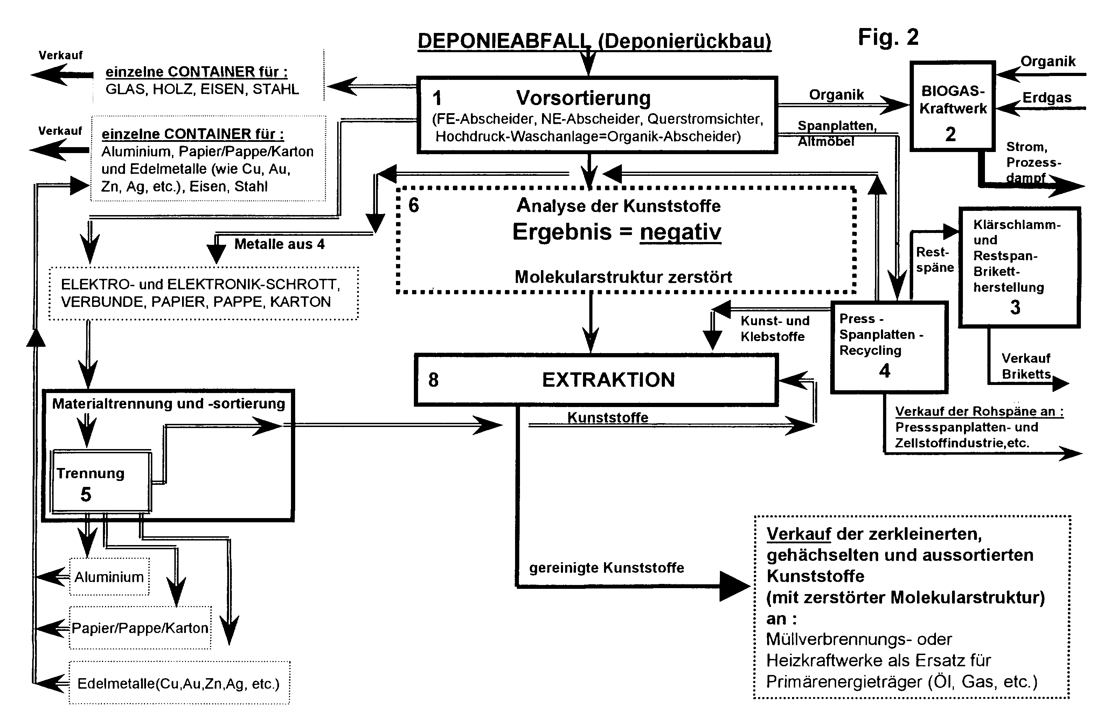

In Figur 1 ist die weitere Behandlung derjenigen Kunststoffgemische dargestellt, deren Qualität in Bezug auf Materialdegradation ausreichend gut für ein nachfolgendes Rccycling ist. In Figur 2 ist hingegen die Weiterbehandlung von Kunststoffgemischen dargestellt, deren Analyse ergeben hat, dass ein Recycling wirtschaftlich nicht mehr lohnt, da die Materialdegradation bereits zu weit fortgeschritten ist. Anhand des Analyseergebnisses wird das Kunststoffgemisch somit in zwei Materialströme getrennt, nämlich in den Materialstrom der nach Farben und Sorten zu sortierenden und trennenden Kunststoffe (Figur 1) und die auszusortierenden Kunststoffe (Figur 2).

In Figur 1 werden die Kunststoffe, die noch in einem Kunststoffgemisch vorliegen, nach der Analyse zu einer Farbtrenneinrichtung 6 transportiert. In der Farbtrenneinrichtung 7 werden die Kunststoffe auf ein Sortierband verbracht und händisch nach den dem Grundfarbensystem nach folgenden sieben Grundfarben, d.h. RAL-Tönen, sortiert: grün, gelb, rot, schwarz, weiß, blau und transparent. Nuancierte Farben werden dem jeweils nächsten Grundfarbenton zugeordnet, beispielsweise hellgrün zu RAL-grün und lila zu RAL-rot. Die Kunststoffe werden in der Farbsortier- und Trenneinrichtung 7 nach Grundfarbenfraktionen getrennt.

Die Grundfarbenfraktionen werden fraktionsweise einer Zerkleinerungseinrichtung aufgegeben. Die Zerkleinerungseinrichtung wird durch eine Schneidmühle mit gekühlten Schneidwerkzeugen gebildet.

Die in den Grundfarbenfraktionen vorliegenden Kunststoffe werden in der Zerkleinerungseinrichtung bis auf eine Partikelgröße im Bereich von 5 bis 20 mm zerkleinert, insbesondere geschreddert und anschließend einer Extraktionseinrichtung 8 zugeführt. Es können auch mehrere Extraktionseinrichtungen, eine pro Grundfarbe, vorgesehen sein. Jede Grundfarbenfraktion wird in der Extraktionseinrichtung 8 getrennt von den anderen Grundfarbenfraktionen von Inhaltsstoffen, beispielsweise migrierten Lebensmitteln wie Milchsäuren und Aromata, Verarbeitungszuschlagsstoffen wie Kieselsäure, Stabilisatoren, Farbcompoundings, sowie Druckfarben und anhaftenden Verschmutzungen durch Oberflächenreinigung und Extraktion befreit und anschließend mittels Erhitzung durch Heissdampf getrocknet. Hierbei verdunstet das Extraktionsmittel und transportiert die extrahierten Stoffe zu einer Extraktionsmittelreinigung. Das Extraktionsmedium wird dort nach jedem Arbeitsgang kondensiert, wobei die extrahierten Stoffe ausfallen und das derart gereinigte Extraktionsmedium wieder eingesetzt werden kann. Das Extraktionsmedium wird in einem geschlossenen Kreislauf gefahren.

Die Druckfarben, die bei der Kondensation ausfallen, werden separiert und zu ihrer Wiederverwertung an die Druckfarbenindustrie verkauft.

Die Extraktionseinrichtung 8 wird im Ausführungsbeispiel durch einen Karussellextrakteur gebildet. Verwendet werden kann beispielsweise ein Karussellextrakteur, wie ihn die Krupp Extraktions GmbH, Hamburg, zur Herstellung von Speiseöl und Gewürzen baut. Bei diesem bekannten Karussellextrakteur wird das Medium Heisswasser dazu benutzt, ätherische Öle, die für den menschlichen Genuss ungeeignet sind, aus Ölsamen und Gewürzen zu extrahieren. Solch ein Extrakteur als Extraktionseinrichtung fasst für eine Extraktion beispielsweise eine Charge von etwa 150 t Material bei einer Extraktionskapazität von 25000 Jahrestonnen.

Bei der Extraktionsbehandlung der einzelnen grundfarbenreinen Kunststofffraktionen wird jedoch nicht Wasser, sondern Ethylacetat als Extraktionsmedium benutzt. Durch den Einsatz von Ethylacetat werden sämtliche Verunreinigungen und Anhaftungen, die bei der Herstellung und Verarbeitung der Kunststoffe vom Hersteller und Verarbeiter eingearbeitet worden sind, ebenso wie spätere Verunreinigungen, die durch den Gebrauch des Produkts entstanden sind, extrahiert.

Die Extraktionseinrichtung weist ein Gehäuse in Form einer Trommel aus Edelstahl auf, in der ein Zellenrad, ebenfalls aus Edelstahl, um seine vertikale Drehachse drehangetrieben wird. Das Zellenrad bildet über den Umfang der Trommel gleichmäßig verteilt Kammern bzw. Segmente, beispielsweise zwölf Segmente. Von einer Einbringstelle über der Trommel wird das Kunststoffgranulat in das jeweils unter der Einbringstelle befindliche Zellenradsegment gefüllt. In Drehrichtung hinter dieser Befüllstation ist eine Sprüheinrichtung angeordnet, mittels der Ethylacetat in ein Segment mit Kunststoffgranulat eingesprüht wird.

Das Ethylacetat weist beim Einsprühen eine Temperatur im Bereich von 30 bis 60°C auf und ist damit wärmer als das bei Umgebungstemperatur eingebrachte Granulat. Durch die erhöhte Temperatur des Ethylacetats wird verhindert, dass Ethylacetat an der Oberfläche des Granulats kondensiert und dann wirkungslos abperlt. Zur Erwärmung des Ethylacetats ist am Ort der Anlage eine Heizvorrichtung vorhanden.

Über den Umfang der Trommel verteilt sind desweiteren eine Station zum Ablassen des Ethylacetats, eine Station zum Einbringen von Heissdampf und schließlich eine Station zum Entladen der Granulatchargen aus den Segmenten in der Trommel vorhanden. Das Ethylacetat wird nach der für eine gründliche Extraktion erforderlichen Einwirkzeit durch eine Öffnung am Boden der Trommel nach unten abgelassen, aufgefangen und verdampft. Der Ethylacetatdampf, der von den gelösten Verunreinigungen befreit ist, wird wieder aufgefangen und zur Wiederverwendung in einen Vorratstank zurückgeleitet. Eine Granulatcharge kann auch mehrfach hintereinander mit dem warmen Ethylacetat besprüht werden, das vor jeder erneuten Besprühung in der beschriebenen Weise abgelassen und einer Wiederverwendung zugeführt wird.

Nach erfolgter Extraktion wird das noch in der Trommel befindliche Granulat an der Heissdampfstation mittels Heissdampf gereinigt. Hierfür wird der Heissdampf von unten in die jeweils zu reinigende Granulatcharge eingebracht. Der Heissdampf steigt im Zellenradsegment nach oben und nimmt hierbei das noch anhaftende Ethylacetat mit.

Gleichzeitig wird das Granulat dabei getrocknet.

Schließlich wird das gereinigte Granulat an der Entladestation entnommen, um dann einer Trennung nach Kunststoffsorten unterzogen zu werden.

Die nichtdrehende Trommel weist eine zylindrische Mantelfläche sowie eine Decken- und eine Bodenfläche auf. Innerhalb der Trommel dreht das Zellenrad mit seinen radialen Segmenten. Hierbei dreht das Zellenrad zwischen der nichtdrehenden Bodenfläche und der nichtdrehenden Deckenfläche der Trommel. Im Bereich der jeweiligen Station weist entweder die Deckenfläche oder die Bodenfläche dem jeweiligen Zweck der Station gemäße Durchbrechungen auf, beispielsweise einen dreieckförmigen Segmenteinschnitt in der Deckenfläche zum Einbringen des Granulats und Auslassschlitze oder eine Auslassperforation in der Bodenfläche zum Ablassen des Extraktionsmediums.

Die Gewinnung farbenreiner Kunststoffe in den beiden Stufen aus (a) Sortierung und Trennung nach Grundfarben und (b) anschließender Extraktion für jede der hierdurch gebildeten grundfarbenreinen Kunststofffraktionen einzeln weist den Vorteil auf, dass im ersten Schritt Fraktionen von Kunststoffteilen erhalten werden, die aus Kunststoffgranulaten entstanden sind, die in großen Mengen ab Raffinerie nach den Grundfarben, insbesondere den RAL-Grundfarben, eingefärbt sind. Diese Einfärbung nach den Grundfarben erfolgt durch Einbettung der entsprechenden Farbmonomere in die Polymerketten der Kunststoffe. Diese Farbmonomere können aus den Polymerketten beschädigungs- oder zerstörungsfrei nicht wieder herausgelöst werden, auch nicht mittels Extraktion. Farbnuancierungen hingegen für kleinere Mengen von Kunststoffen werden dadurch erzielt, dass die Kunststoffoberflächen teil- oder vollflächig bedruckt oder lackiert werden oder durch Zugabe von Farbcompoundings als Zuschlagsstoff beispielsweise bei einer Extrusion. Hinzu kommen weitere Zuschlagsstoffe, um andere Materialeigenschaften einzustellen. Die nach der Sortierung und Trennung nach Grundfarben erhaltenen Kunststofffraktionen bestehen somit aus einem Grundmaterial, nämlich den grundfarbenreinen Kunststoffen, das in anschließenden Aufarbeitungsschritten stets gleich behandelt werden kann. In diesem Sinne ist das Material in jeder der grundfarbenreinen Kunststofffraktionen gleich. In der anschließenden Extraktion in der Extraktionseinrichtung 8 werden dann Additive bzw. Compoundings extrahiert, die bei der Herstellung der zu recycelnden Kunststoffprodukte vor der Formung der Kunststoffprodukte eingebracht wurden, so dass daraus beispielsweise Flachfolien-, Spritzguss-, Tiefzieh- und weitere Kunststoffe hergestellt wurden. So werden z.B. bei Kunststoffen, die im Spritzgussverfahren verarbeitet wurden, zuvor Fließverbesserer zugesetzt. Diese Fließverbesserer würden jedoch die Produktion von Flachfolien, z.B. die Produktion von biaxial gereckten Folien im Tenterverfahren behindern bzw. zu Löchern in der Folie führen. Um also aus einem Spritzgusskunststoff nach dem Recyceln einen Flachfolienkunststoff herstellen zu können, werden die Fließverbesserer mittels der Extraktion in der Extraktionseinrichtung 8 entfernt. Das so gewonnene Recyclat kann nach einer anschließenden Trennung nach Kunststoffsorten zur Herstellung von beispielsweise Flachfolienkunststoffen wieder konfektioniert werden, im Beispielfall durch Eincompoundieren von Kieselsäure als Abstandshalter, um ein statisches Verkleben der aufgewickelten Folienlagen untereinander zu verhindern.

Nach der Extraktion werden die farbreinen und gereinigten Kunststofffraktionen nacheinander, d.h. jede Farbe einzeln, in einem daran anschließenden Arbeitsgang einer mechanisch-physikalischen Trenneinrichtung 9 zugeführt und nach einzelnen Kunststoffsorten getrennt, insbesondere PET, PVC, PS, LDPE/PP, HDPE, PUR und ABS.

Einer weiteren Trenneinrichtung 5 werden die nach dem Aussortieren der Kunststoffe noch übriggebliebenen Materialfraktionen, Elektro- und Elektronikschrott, Materialverbunde, Papier, Pappe, Karton und Aluminium von der Vorsortier- und Trenneinrichtung 1 zugeführt und dort voneinander getrennt. Die Trenneinrichtung 5 erhält auch Material, das in einer Span- und Faserrecyclingeinrichtung 4 entfernt worden ist, insbesondere metallische Materialien, beispielsweise Beschläge. Die in der Trenneinrichtung 5 anfallenden Kunststoffe werden der Farbtrenneinrichtung 7 aufgegeben.

Die Trenneinrichtungen 5 und 9 werden je durch eine mechanisch-physikalische Trenneinrichtung der Art gebildet, wie sie beispielsweise aus der EP 0 751 831 B1 bekannt ist. In dieser Anlage werden mit einem rotierenden Werkzeug Materialverbunde wie beispielsweise Chipstüten in die einzelnen Grundmaterialien, z.B. Aluminium, Low-Density-Polyethylen und Polyester, zerlegt und sortenrein getrennt. Nichtmagnetische Metalle, magnetische Metalle, Pappe, Papier, Karton und Edelmetalle werden ebenfalls sortenrein getrennt und in bereitsstehenden Containern für einen Verkauf abtransportiert.

Die Trenneinrichtung 9 für Kunststoffe ist im Ausführungsbeispiel räumlich mit der weiteren Trenneinrichtung 5 zusammengefasst, arbeitet jedoch hiervon getrennt, d.h. es findet zwischen den beiden Trenneinrichtungen 5 und 9 kein Materialtransport statt. Vorzugsweise handelt es sich bei den Trenneinrichtungen 5 und 9 um ein und dieselbe Einrichtung, die auf ihre jeweilige Trennaufgabe durch Umrüstung und/oder Änderung von einstellbaren Verfahrensparametern angepasst wird. Bei Verwendung einer Trenneinrichtung nach der EP 0 751 831 B1 kann hierfür insbesondere das rotierende Werkzeug gewechselt werden. Desweiteren werden die Verfahrensparameter bei solch einer Trenneinrichtung der jeweiligen Trennaufgabe gemäß optimal eingestellt, beispielsweise die Rotationsgeschwindigkeit des Werkzeugs. Die Trenneinrichtungen 5 und 9 sind in der Lage, die verschiedenen Kunststoff- und/oder Metall- und/oder Kunststoff-/Metallfraktionen sortenrein voneinander zu trennen.

Kunststoffmaterialien, die nach der Trennung in der Trenneinrichtung 5 anfallen, beispielsweise aus Metall/Kunststoff-Verbunden von Chipstüten und dergleichen, werden der Farbtrenneinrichtung 7 aufgegeben.

In der Trenneinrichtung 9 anfallende Kunststoffe, die mechanisch-physikalisch nicht voneinander trennbar sind, werden von der Trenneinrichtung 9 mittels eines Förderbands zu einem Thermoscanner 10 transportiert und dort thermisch voneinander getrennt. Solch eine thermische Trennung wird, um ein Beispiel anzuführen, vorzugsweise für das Gemisch aus LDPE und PP durchgeführt, die wegen ihrer nahezu identischen spezifischen Gewichte mittels der Trenneinrichtung 9 nicht getrennt werden können.

Der Thermoscanner 10 weist mehrere identische Einzelthermoscanner auf, nämlich je einen für jede der Grundfarben. Im Ausführungsbeispiel wird der Thermoscanner 10 somit durch 7 Einzelthermoscanner gebildet, die vorzugsweise parallel nebeneinander angeordnet sind. Erneute Farbvermischungen werden vermieden.

Jeder der Einzelthermoscanner arbeitet nach dem Prinzip des Heißluft-Schrumpftunnels und umfasst eine Kammer bzw. einen Tunnel, in dem ein Endlosfördermittel installiert ist. Jeder der Tunnel wird mit Heissluft beschickt, das insbesondere im Tunnel eine Temperatur aufweist, die wenigstens so hoch wie die Schmelztemperatur des niedriger schmelzenden Kunststoffs, aber niedriger als diejenige des höher schmelzenden Kunststoffs ist. Das auf dem Fördermittel aufliegende Gemisch aus wenigstens zwei Kunststoffen mit unterschiedlichen Schmelztemperaturen wird auf diese Weise durch Einstellung der Temperatur der Tunnelatmosphäre thermisch getrennt. Das niedriger schmelzende Material, im Ausführungsbeispiel LDPE, wird mittels dem Heissmedium auf eine Temperatur gebracht, die es vom festen in den flüssigen Aggregatzustand übergehen lässt. Das demgegenüber höher schmelzende andere Kunststoffmaterial bleibt bei der gewählten Temperatur im festen Aggregatzustand.

Das Heissgas des Thermoscanners 10 ist vorzugsweise Heissluft. Die Energie zum Erhitzen dieses Mediums wird innerhalb der Recyclinganlage selbst gebildet, nämlich mittels des Biogaskraftwerks 2, wie nachstehend noch beschrieben wird.

Der Thermoscanner 10 wird vorteilhafterweise durch einen umkonstruierten Schrumpftunnel gebildet, wie er Anwendung zum Einschrumpfen von zum Beispiel Paketen mittels Schrumpffolie findet. Die Verwendung solch eines angepasst umkonstruierten Schrumpftunnels zur thermischen Trennung von Kunststoffen im allgemeinen, bevorzugt jedoch von Kunststoffabfällen, stellt als solche ebenfalls einen Gegenstand der Erfindung dar.

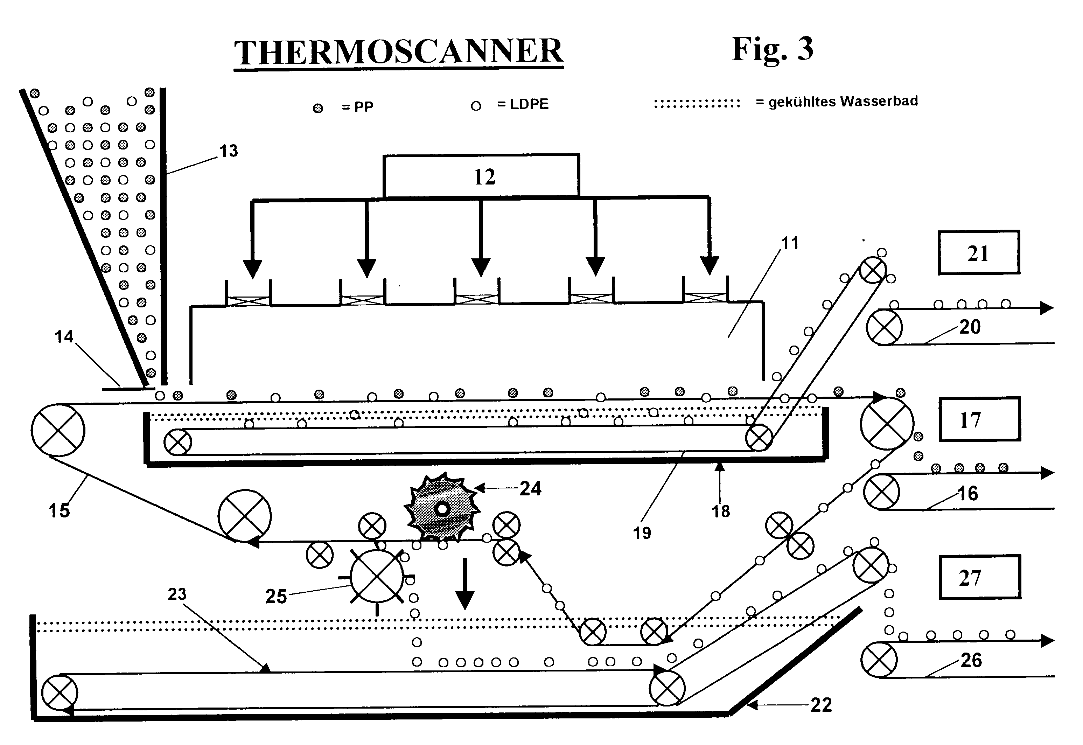

Figur 3 zeigt solch einen Thermoscanner 10, der durch Unkonstruktion aus einem herkömmlichen Schrumpftunnel gebildet ist. Dabei ist stellvertretend ein einzelner der mehreren Tunnel 11 des Thermoscanners 10 dargestellt. Der Tunnel 11 wird mittels eines Heissluftgebläses 12 beheizt.

Eine Grundfarbenfraktion der farbreinen und gereinigten Kunststofffraktionen aus LDPE und PP wird auf dem Fördermittel 15 des Heissluftunnels 11 über ein Granulatsilo 13 mittels einer Dosiereinrichtung 14 zugeführt. Das Fördermittel 15 ist ein Endlosförderband, das durch miteinander verbundene Stahlglieder gebildet wird. Die Stahlglieder sind teflonbeschichtete Gitter. Das Gitterraster ist so gewählt, dass das LDPE und PP Granulat, vorzugsweise LDPE- und PP-Siebschnitt, beim Einlauf in den Heisslufttunnel 11 auf dem Fördermittel 15 liegen bleibt und nicht durch die Gitter hindurchfällt. Das Fördermittel 15 führt das Gemisch aus LDPE und PP durch den Heisslufttunnel 11, der auf eine Temperatur zwischen dem Schmelzpunkt von LDPE und dem von PP gehalten wird. Die Temperatur wird vorzugsweise nach der Tabelle von "Hans-Jürgen Saechtling, Kunststoff - Taschenbuch, Hansa Verlag 1986, München und Wien" erstellt. Aus dem Granulatsilo 13 werden die LDPE und PP Partikel vor dem Einlauf in den Heisstunnel 11 auf das Fördermittel 15 verbracht. Das Fördermittel 15 läuft durch den gesamten Heisslufttunnel 11 hindurch. Nach Durchlauf durch den Heisslufttunnel 11 werden die auf dem Fördermittel 15 liegenden PP Partikel, die wegen des höheren Schmelzpunkts von PP ihre ursprüngliche Form behalten haben, von dem Fördermittel 15 auf ein darunter angeordnetes Abfördermittel 16 abgeworfen. Das Abfördermittel 16 ist vorzugsweise auch ein endlos umlaufendes Förderband. Über dem Abfördermittel 16 ist eine Kaltluftdusche 17 installiert, die das PP wieder auf Raumtemperatur bringt und trocknet. Anschließend werden die PP Partikel in eine Fördermulde zur Weiterverarbeitung verbracht.

Bei der in dem Heisslufttunnel 11 herrschenden Temperatur schmilzt das LDPE und fällt oder fließt durch das Fördermittel 15 hindurch in eine darunterliegende, nach oben offene Kühleinrichtung 18. Die Kühleinrichtung 18 ist vorzugsweise als Kühlbad ausgebildet; im Ausführungsbeispiel handelt es sich um ein gekühltes Wasserbad. In der Kühleinrichtung 18 findet eine Schockabkühlung statt, bei der das LDPE wieder vom fließenden in den festen Aggregatzustand übergeht. Parallel unterhalb des Fördermittels 15 verlaufend ist in der Kühleinrichtung 18 ein weiteres Fördermittel 19, vorzugsweise in Form eines engmaschigen Förderbands, angeordnet. Das wieder erstarrte LDPE fällt auf dieses Fördermittel 19 und wird darauf auffliegend durch die Kühleinrichtung 18 hindurch, d. h. aus dem Kühlbad heraus, auf ein Abfördermittel 20, vorzugsweise ebenfalls in Form eines Förderbands, verbracht. Das Abfördermittel 20 fördert das LDPE unter einer weitere Kaltluftdusche 21 hindurch, mittels der es mit Luft von etwa 20°C getrocknet wird. Anschließend wird es in eine eigene Fördermulde zur Weiterverarbeitung sortenrein verbracht.

Ein anderer Teil des LDPE, nämlich der Teil, der an dem Fördermittel 15 nach dem Schmelzen noch anhaftet, wird in eine weitere Kühleinrichtung 22, gefördert. Auch die Kühleinrichtung 22 wird vorzugsweise durch ein Kühlbad, besonders bevorzugt durch ein gekühltes Wasserbad, gebildet. Die Kühleinrichtung 22 ist vorzugsweise unterhalb des Fördermittels 15 und vorzugsweise unterhalb der Kühleinrichtung 18 angeordnet. In der Kühleinrichtung 22 bzw. in dem bevorzugten Kühlbad, ist ein Fördermittel 23 angeordnet, das bevorzugt ebenfalls als engmaschiges Förderband ausgebildet ist. Das geschmolzene, noch an dem Fördermittel 15 anhaftende LDPE wird bei dem Durchfördern durch die Kühleinrichtung 22 ebenfalls schockgekühlt und geht dabei in den festen Aggregatzustand über. Die hierbei erstarrten LDPE Partikel, die an dem Fördermittel 15 anhängen, werden mittels eines Ausdrückers 24, vorzugsweise eine Stachelwalze, aus dem Fördermittel 15 herausgedrückt. Der Ausdrücker 24 ist hierfür passgenau auf das Raster des Fördermittels 15 gearbeitet. Durch einen in Förderrichtung des Fördermittels 15 hinter dem Ausdrücker 24 angeordneten Abstreifer 25 werden das LDPE von dem Förderband 15 abgekehrt. Der Abstreifer 25 wird vorzugsweise durch einen rotierenden Stahlbesen gebildet, der entgegen der Förderrichtung des Förderbands 15 arbeitet. Das abgekehrte LDPE fällt einfach aufgrund der Schwerkraft auf das Fördermittel 23. Das Fördermittel 23 fördert das LDPE zu einem dritten Abfördermittel 26, das im Ausführungsbeispiel ebenfalls als Abförderband ausgebildet ist. Das Abfördermittel 26 befördert das LDPE unter einer dritten Kaltluftdusche 27 hindurch, wo es mittels Luft von etwa 20°C getrocknet wird. Anschließend wird dieser Teil des LDPE ebenfalls zu einer Fördermulde zur Weiterverarbeitung sortenrein verbracht. Es kann sich um die gleiche Fördermulde wie bei dem LDPE handeln, das in der Kühleinrichtung 18 wiederverfestigt wurde.

Die Kaltluftduschen 17, 21 und 27 können getrennte Einheiten oder auch eine mittels einem einzigen Gebläse betriebene Kombinationseinheit sein.

Mehrere Thermoscanner 10 können auch hintereinander, kaskadenartig angeordnet sein, falls mehr als zwei Kunststoffsorten voneinander thermisch getrennt werden sollen.

Die Kunststofffraktionen, die die Trenneinrichtung 9 und den Thermoscanner 10 nun sorten- und farbrein verlassen, werden zu Silos transportiert, die vorzugsweise ebenfalls am Ort der Recyclinganlage aufgebaut sind, und dort in den einzelnen Farben und Sorten bis zu ihrer Weiterverarbeitung zwischengelagert. Sie können bei Weiterverarbeitern oder, wie im Ausführungsbeispiel, in einer Compoundierungs- und Extrusionseinrichtung 30 am Ort der Recyclinganlage nach Kundenwunsch compoundiert werden, beispielsweise nach DIN eingefärbt und mit Zuschlagsstoffen für den neuen Einsatzzweck ausgestattet und anschließend extrudiert werden. Hierfür werden die sorten- und farbreinen Kunststofffraktionen aufgeschmolzen und die jeweiligen Compoundings eingebracht, anschließend extrudiert und regranuliert. Das wiedergewonnene, sorten- und farbreine Regranulat wird zum Verkauf abtransportiert.

Mit der Erfindung ist es somit möglich, beispielsweise aus Spritzgusskunststoff einen Flachfolienkunststoff herzustellen.

In Fig. 2 ist die Weiterbehandlung desjenigen Kunststoffmaterialstroms dargestellt, der aufgrund des Ergebnisses der Kunststoffanalyse aussortiert wurde. Die aussortierte Charge wird zunächst zu Kunststoffpartikeln in einer Größe zwischen 5 und 20 mm verkleinert. Hierfür wird die bereits beschriebene Zerkleinerungseinrichtung verwendet, die auch für diejenigen Chargen verwendet wird, die der beschriebenen Farbtrennung unterzogen werden.

Die aussortierte Kunststoffcharge mit den zerkleinerten Kunststoffpartikeln wird der Extraktionseinrichtung 8 aufgegeben und dort in der gleichen Weise behandelt wie vorstehend zu den Grundfarbenfraktionen beschrieben.

Nach der Extraktion wird das Granulat der derart gereinigten Kunststoffpartikel in Lagerbehältnisse verbracht oder direkt für die Verwendung als Brennstoff in Verbrennungsanlagen abgefördert.

Die Recyclinganlage des Ausführungsbeispiels weist sämtliche beschriebenen Komponenten an einem einzigen Anlagenort auf. Eine Disloziierung von Komponenten ist jedoch möglich. Sie kann insbesondere den örtlichen Gegebenheiten, beispielsweise dem Gelände oder begrenzten Aufstellflächen, flexibel angepasst werden.

Als weitere Materialfraktion werden in der Vorsortier- und Trenneinrichtung 1 Pressspanmaterialien und Altmöbel aussortiert und als eigene Materialfraktion einer Span- und Faserrecyclingeinrichtung 4 zugeführt. Die Recyclingeinrichtung 4 arbeitet nach einem mehrstufigen thermo-mechanischen Verfahren, beispielsweise nach dem in der DE 195 09 152 A1 beschriebenen Verfahren. Mit ihr werden aus Altmöbeln und Pressspanmaterialien, insbesondere Pressspanplatten, sowie sonstigen Produktionsreststücken und Ausschuss der holzverarbeitenden Industrie, wieder verarbeitbare Holzspäne und Zellstofffasern gewonnen. Die hier gewonnenen Holzspäne und Fasern werden am Ende des chemo-thermo-mechanischen Verfahren in Container verladen und an die Spanplatten- und/oder die Zellstoffindustrie geliefert. Die Span- und Faserausbeute liegt bei über 95 %.

Die restlichen Späne und Fasern, die nicht weiterverwertbar sind, werden im Klärschlamm einer nachgeschalteten Brikettherstellungseinrichtung 3 aufgegeben und dort zu Klärschlamm Brikettstücken gepresst. Es wird somit Klärschlamm der vorgelagerten Recyclingeinrichtung 4 zu Briketts gepresst und anschließend getrocknet. Wegen des noch hohen Gehalts, z.B. von Papierfasern und Holzrestspänen aus der Recyclingeinrichtung 4, können die Briketts als Ersatz für Kohlebriketts oder Holz zur Feuerung in Kaminöfen eingesetzt werden. Hierzu werden die Klärschlammbriketts zu Paketen von beispielsweise je 10 kg als Trägereinheit abgepackt und zum Verkauf abtransportiert.

Mit dem vorstehend beschriebenen ALL INPUT Recycling kann die Entsorgung beispielsweise in Deutschland mit nur noch zwei Müllgebinden pro Haushalt realisiert werden: Eine Biotonne, die aus hygienischen Gründen beibehalten wird, wobei der Biomüll in Kunststoffsäcke verpackt sein darf, und eine Restmülltonne für sämtliche weiteren Haushaltsabfälle. Von Seiten der erfindungsgemäßen Recyclingtechnologie her ist es jedoch auch möglich, sämtliche Haushaltsabfälle in einer einzigen Tonne zu sammeln. Aufgrund der einfachen Handhabung beim Endverbraucher ist die ALL INPUT Recyclingtechnologie auch im besonderen Maße für den Einsatz in Ländern geeignet, in denen eine aufwendige Vorsortierung durch die Endverbraucher nicht realisierbar ist.

Schließlich ist in die Recyclingeinrichtung das bereits erwähnte Biogaskraftwerk 2 integriert. Das Biogaskraftwerk weist einen Biogaserzeuger auf, dem der organische Abfall aus der Vorsortierungs- und Trenneinrichtung 1 zugeführt wird. Die Biomasse wird in dem Biogaserzeuger durch Mikroorganismen in Methangas verwandelt. Das erzeugte Methangas wird in einer Verdichterstation verdichtet und anschließend, je nach anfallender Gasmenge, abhängig vom Durchsatz des Biogaserzeugers, einer oder mehreren kleinen Gasturbinen des Biogaskraftwerks 2 zugeführt. Mit jeder der Gasturbinen ist ein Generator zur Stromerzeugung gekoppelt. Der Vorteil der kleinen Gasturbinen gegenüber ersatzweise ebenfalls verwendbaren Gasmotoren besteht in der wesentlich höheren Energieausbeute, der längeren Lebensdauer, höheren Zuverlässigkeit und Standfestigkeit der Gasturbine.

Wahlweise kann statt Methangas oder zusätzlich dazu Erdgas der oder den Gasturbinen zugeführt und darin verbrannt werden. Das Erdgas wird in einem Vorratstank der Anlage zu diesem Zweck bevorratet und kann jederzeit zugeleitet werden. Durch die Anordnung mehrerer Gasturbinen und/oder die Zuleitung von Erdgas kann jede Gasturbine jederzeit mit optimaler Füllung betrieben werden.

Es besteht auch die Möglichkeit, anlagenfremde organische Abfälle im Biogaskraft 2 zu nutzen. Diese anlagenfremde Organik kann beispielsweise aus der umliegenden Landwirtschaft oder den Haushalten der umliegenden Gemeinden stammen. Sie kann dem Biogaserzeuger 2 aufgegeben werden. Es kann zur Methanerzeugung hierfür auch ein weiterer eigener Biogaserzeuger vorgesehen sein. Auch das hieraus erzeugte Methangas kann in den Gasturbinen verbrannt werden.

Das Abgas der Gasturbine bzw. Gasturbinen, das durch die Verbrennung von Methangas, Erdgas oder einer Mischung von beiden Gasen entsteht, wird zur Herstellung von Hochdruckdampf in einem Dampfkessel verwendet. Der Hochdruckdampf wird einer Dampfturbine mit nachgeschaltetem Generator zugeführt, so dass die Energie des Verbrennungsabgases ein weiteres Mal ausgenutzt wird. Der aus der Dampfturbine austretende Dampf wird als Prozessenergie für die Span- und Faserrecyclingeinrichtung 4, die Brikettherstellungseinrichtung 3, die Extraktionseinrichtung 8 und den Thermoscanner 10 eingesetzt. Die Prozessenergie kann wieder in die Dampferzeugung zurückgeführt oder in ein Fernwärmenetz eingespeist werden.

### Bezugszeichenliste

- 1: Erste Sortentrenneinrichtung, Vorsortier- und Trenneinrichtung
- 2: Biogaskraftwerk
- 3: Presse, Brikettherstellungseinrichtung
- 4: Erste Sortentrenneinrichtung, Span- und Faserrecyclingeinrichtung
- 5: Erste Sortentrenneinrichtung, mechanisch-physikalische Trenneinrichtung
- 6: Analyseeinrichtung
- 7: Farbtrenneinrichtung
- 8: Extraktionseinrichtung, Extrakteur
- 9: Zweite Sortentrenneinrichtung, mechanisch-physikalische Trenneinrichtung
- 10: Zweite Sortentrenneinrichtung, Thermoscanner
- 11: Tunnel
- 12: Heissluftgebläse
- 13: Granulatsilo
- 14: Dosiereinrichtung
- 15: Fördermittel
- 16: Abfördermittel
- 17: Kaltluftdusche
- 18: Kühleinrichtung, Kühlbad
- 19: Fördermittel
- 20: Abfördermittel
- 21: Kaltluftdusche
- 22: Kühleinrichtung, Kühlbad
- 23: Fördermittel
- 24: Ausdrücker, Stachelwalze
- 25: Abstreifer, Stahlbesen
- 26: Abfördermittel
- 27: Kaltluftdusche
- 28: --
- 29: --
- 30: Compoundierungs- und Extrusionseinrichtung

## Patentansprüche

1. Sortier- und Trennverfahren für ein Recycling von Kunststoffen, die in einem Kunststoffgemisch als Abfall vorliegen, wobei das Verfahren eine Trennung der Kunststoffe nach Kunststoffsorten beinhaltet,
**dadurch gekennzeichnet, dass**
das Kunststoffgemisch nach Farben sortiert und getrennt und dadurch erhaltene, nach Farben getrennte Kunststofffraktionen nach Kunststoffsorten sortiert und getrennt werden.

2. Verfahren nach Anspruch 1, dadurch gekennzeichnet, dass das Kunststoffgemisch nach Grundfarben sortiert und getrennt wird, wobei die Grundfarben vorzugsweise standardisierte Farben, insbesondere RAL-Grundfarben sind.

3. Verfahren nach einem der vorhergehenden Ansprüche, dadurch gekennzeichnet, dass nach Farben getrennte Kunststofffraktionen mittels Ethylacetat als Extraktionsmedium in einem Extrakteur (8), vorzugsweise ein Karussellextrakteur, einer Extraktion unterzogen werden.

4. Verfahren nach einem der vorhergehenden Ansprüche, dadurch gekennzeichnet, dass das Kunststoffgemisch einer Analyse auf Materialdegradation unterzogen wird und die in dem Kunststoffgemisch enthaltenen Kunststoffe nach Farben sortiert und getrennt werden, wenn mittels der Analyse festgestellt wird, dass ein vorgegebener Degradationsgrad nicht überschritten wird.

5. Verfahren nach einem der vorhergehenden Ansprüche, dadurch gekennzeichnet, dass Kunststoffe (LDPE, PP) mit unterschiedlichen Schmelztemperaturen, die durch oder nach der Trennung nach Farben als Gemisch erhalten worden sind, mittels eines Thermoscanners (10) thermisch voneinander getrennt werden.

6. Verfahren nach dem vorhergehenden Anspruch, dadurch gekennzeichnet, dass der Thermoscanner (10) ein Fördermittel (15) mit einer perforierten Auflage umfasst, auf der die thermisch zu trennenden Kunststoffe (LDPE, PP) transportiert und auf eine Temperatur erwärmt werden, bei der wenigstens einer der Kunststoffe (LDPE, PP) in einem fließfähigen und wenigstens ein anderer der Kunststoffe (LDPE, PP) in einem festen Aggregatzustand vorliegt.

7. Verfahren nach einem der beiden vorhergehenden Ansprüche, dadurch gekennzeichnet, dass ein durch Erwärmung in den fließfähigen Aggregatzustand überführter Kunststoff (LDPE) zu seiner Wiederverfestigung in einem Kühlbad (18, 22) aufgefangen wird.

8. Verfahren nach einem der vorhergehenden Ansprüche, dadurch gekennzeichnet, dass das Kunststoffgemisch nach einer Trennung von in dem Materialgemisch enthaltenen Nichtkunststoffen mit einem Waschfluid gewaschen und das Waschfluid mit darin enthaltenen, abgewaschenen organischen Stoffen einem Biogaskraftwerk (2) mit einem Biogaserzeuger zugeführt wird, der aus den organischen Stoffen mittels Mikroorganismen Methangas erzeugt,
dass das Methangas in einer Gasturbine verbrannt und
dass ein Verbrennungsgas der Gasturbine zur Erzeugung von Prozessenergie für die Sortierung und Trennung der Kunststoffe verwendet wird.

9. Anlage für ein Recycling von Kunststoffen und vorzugsweise auch für ein Recycling von anderen Materialien, die in einem Abfallmaterialgemisch enthalten sind, die Anlage umfassend:
a) eine erste Sortentrenneinrichtung (1, 4, 5), mit der Kunststoffe und Nichtkunststoffe voneinander getrennt werden,
b) eine zweite Sortentrenneinrichtung (9, 10), mit der die von den Nichtkunststoffen getrennten Kunststoffe nach Kunststoffsorten voneinander getrennt werden,
**dadurch gekennzeichnet, dass**
c) die Kunststoffe von der ersten Sortentrenneinrichtung (1, 4, 5) zu einer Farbtrenneinrichtung (7; 7, 8) transportiert werden, in der die Kunststoffe nach Farben sortiert und voneinander getrennt und in Farbfraktionen zur zweiten Sortentrenneinrichtung (9, 10) transportiert werden.

10. Anlage nach dem vorhergehenden Anspruch, dadurch gekennzeichnet, dass die Farbtrenneinrichtung (7, 8) einen Karussellextrakteur (8) aufweist, in dem die nach Farben sortierten Kunststofffraktionen einzeln mit einem heißen Extraktionsmedium einer Extraktion unterzogen.

11. Anlage nach einem der vorhergehenden Ansprüche, dadurch gekennzeichnet, dass die zweite Sortentrenneinrichtung (9, 10) einen Thermoscanner (10) umfasst, der in einem Heissgastunnel (11) ein Fördermittel (15) mit einer perforierten Auflage für Kunststoffe und vorzugsweise eine unter der perforierten Auflage angeordnete Kühleinrichtung (18, 22) aufweist.

12. Anlage nach einem der vorhergehenden Ansprüche, dadurch gekennzeichnet,
dass die Anlage ein Biogaskraftwerk (2) mit einem Biogaserzeuger und wenigstens einer dem Biogaserzeuger nachgeschaltete Gasturbine aufweist,
dass der Biogaserzeuger aus organischen Stoffen, die in der Anlage aus dem Materialgemisch entfernt worden sind, mittels Mikroorganismen Methangas erzeugt, dass das Methangas in der Gasturbine verbrannt und
dass ein Verbrennungsabgas der Gasturbine zur Erzeugung von Prozessenergie und/oder die Gasturbine zur Erzeugung von elektrischer Energie für die Anlage verwendet wird.

13. Anlage nach einem der vorhergehenden Ansprüche, dadurch gekennzeichnet, dass die Anlage eine Span- und Faserrecyclingeinrichtung (4) umfasst, mit der in einem mehrstufigen chemo-thermo-mechanischen Verfahren aus Holzabfällen, die in der Anlage aus dem Materialgemisch herausgetrennt worden sind, wieder verarbeitbare Späne und Fasern gewonnen werden.

14. Anlage nach einem der vorhergehenden Ansprüche, dadurch gekennzeichnet,
dass die Kunststoffe mittels einer Analyseeinrichtung (6) einer Analyse auf Materialdegradation unterzogen werden
und Kunststoffe nur dann nach Farben sortiert und getrennt werden, wenn eine Materialdegradation der Kunststoffe einen vorgegebenen Degradationsgrad nicht überschreitet und im Falle einer Überschreitung vorzugsweise für eine Verwendung als Brennmaterial in Kunststoffpartikels zerkleinert werden.
